# EUROPÄISCHE PATENTSCHRIFT

(11) **EP 1 979 674 B1**
(45) Veröffentlichungstag und Bekanntmachung des Hinweises auf die Patenterteilung: **11.03.2020**
(21) Anmeldenummer: 07700181.6
(22) Anmeldetag: 04.01.2007
(51) Int. Cl.: F23B 30/00, F23B 50/06, F23B 50/12, F23G 5/027, F23G 5/46, F23G 7/10, F23L 15/00

(54) **VERFAHREN ZUM BETRIEB EINES HOLZPELLET-BLOCKHEIZKRAFTWERKS MIT STIRLINGMOTOR**
METHOD OF OPERATING A WOOD-PELLET COGENERATION UNIT WITH STIRLING ENGINE
PROCÉDÉ D'OPÉRATION D'UNE INSTALLATION DE COGÉNÉRATION À GRANULES DE BOIS DOTÉE D'UN MOTEUR STIRLING

(30) Priorität: 11.01.2006 DE 102006001299
(43) Veröffentlichungstag der Anmeldung: 15.10.2008
(73) Patentinhaber: Sachsen Stirling GmbH, 09575 Eppendorf (DE)
(72) Erfinder: Weber, Eckhart, 90403 Nürnberg (DE)
(74) Vertreter: Fiener, Josef
(86) Internationale Anmeldenummer: PCT/EP2007/000037
(87) Internationale Veröffentlichungsnummer: WO 2007/082640

(56) Entgegenhaltungen:
- WO-A-02/084174
- DE-A1- 3 924 723
- DE-A1- 4 440 603
- JP-A- H 074 310
- US-A- 5 243 963

## Beschreibung

Die Erfindung betrifft ein Verfahren zum Betrieb eines Holzpellet-Blockheizkraftwerks (Holzpellet-BHKW), umfassend eine Pelletzuführung, eine Brennkammer mit einer vorgeschalteten Vergasungsbrennkammer und einem darin angeordneten Rost, eine Entaschungseinrichtung und einen Stirlingmotor mit einem angeschlossenen Seitenkanalverdichter.

Solche Holzpellet-BHKWs finden neuerdings verstärktes Interesse zur dezentralen Verstromung von Biomasse in kleinen Leistungseinheiten als Kraft-Wärme-Kopplung (KWK) in Ein- und Mehrfamilienhäusern. Dort sollen sie die übliche Hausheizung und Warmwasserbereitung ersetzen und zusätzlich möglichst viel Strom erzeugen, der ins öffentliche Netz eingespeist wird und nach dem Energie-Einspeise-Gesetz (EEG) vergütet wird.

Solche Holzpellet-BHKWs mit Stirlingmotor sind auf dem Weltmarkt noch nicht als Seriengeräte erhältlich. Einige Holzpelletkessel-Hersteller unternehmen Versuche ihre Holzpelletkessel mit Stirlingmotoren auszustatten, so z.B. die Firma Hoval in Liechtenstein oder die Firma Energiebig in Österreich. In solchen Holzpelletkesseln werden mit einer Dosierschnecke Pellets auf einen Rost befördert, dort entzündet und verbrannt. Die Asche fällt teilweise durch den Rost, wird teilweise von den Flammen mitgenommen und lagert sich so in der Aschelade, auf dem Kesselboden, in den Rauchzügen und im Kamin ab und muss von dort in regelmäßigen Intervallen entfernt werden. Der Stirlingmotor ragt mit seinem Erhitzerkopf in die heiße Verbrennungszone, entnimmt dort einen Teil der Hochtemperaturwärme und erzeugt aus diesem Wärme-Teil, seinem Wirkungsgrad entsprechend, z.B. 20% Strom und 80% Warmwasser. Der Rest der Hochtemperaturwärme im heißen Abgas, nachdem diese den Stirlingerhitzerkopf passiert hat, wird an den Kesselwänden und den Rauchzügen zu Warmwasser umgewandelt. Deswegen erzeugen solche Holzpellet-BHKWs mit Stirlingmotor aus dem Brennstoff nur sehr wenig Strom (5 - 10%), weisen große und schwere Holzpelletkessel auf und es bedarf, wegen der Entaschung, häufiger Wartung. Brennwerttechnik wird in Holzpelletkesseln wegen der Ascheproblematik noch nicht angewendet.

Für den wirtschaftlichen Einsatz solcher BHKWs in Ein- und Mehrfamilienhäusern ist es zwingend notwendig, dass ein möglichst hoher Stromanteil erzielt wird.

Das Dokument WO 02/084174 A zeigt ein Holzpellet-Blockheizkraftwerk mit einer Pelletzuführung, einer Brennkammer, einer der Brennkammer vorgeschalteten Vergasungsbrennkammer mit einem darin angeordneten Rost und einem Abgasrekuperator, welcher Verbrennungsluft vorwärmt. Die Holzpellets werden mit Verbrennungsluft vergast indem Verbrennungsluft oberhalb des Rosts in die Vergasungsbrennkammer geführt wird. Das so entstehende Brenngas gelangt zusammen mit Asche nach unten durch den Rost in die Brennkammer, wobei es unter dem Rost mit einem Strömungsimpuls von Verbrennungsluft versetzt wird, wodurch in der Brennkammer ein Potenzialwirbel entsteht, der Abgas, Brenngas und heiße Verbrennungsluft intensiv mischt, so dass Brenngas und Aschepartikel vollständig verbrennen. Wünschenswert wäre eine Anlage, die möglichst klein, kompakt und wartungsarm ist und die zur Erhöhung des Gesamtwirkungsgrades zusätzlich Brennwerttechnik benutzt. Der Erfindung liegt daher die Aufgabe zu Grunde, ein Verfahren zum Betrieb eines Holzpellet-Blockheizkraftwerks mit den oben genannten Eigenschaften zu schaffen.

Diese Aufgabe wird erfindungsgemäß dadurch gelöst, dass
- ein Abgasrekuperator Verbrennungsluft vorwärmt und Holzpellets mit einem Teil dieser heißen Luft (Primärluft) vergast werden,
- dieser Teil der heißen Verbrennungsluft oberhalb des Rosts in die Vergasungsbrennkammer geführt wird und das so entstehende Brenngas zusammen mit Asche von dem Seitenkanalverdichter (starkes Saugzuggebläse) nach unten durch den Rost gesaugt wird,
- das Brenngas unter dem Rost derartig mit einem Strömungsimpuls des Restes der heißen Verbrennungsluft (Sekundärluft) versetzt wird, dass zum einen ein niedriger Lambdawert nahe der CO- Grenze eingehalten wird und abhängig von der Temperatur der Brennkammer die Verbrennung an einer zentralen Düse stabilisiert wird oder sich mit zunehmender Temperatur der Brennkammer mehr und mehr der Zustand der flammenlosen Verbrennung einstellt, wobei in der Brennkammer ein Potenzialwirbel entsteht, der Abgas, Brenngas und heiße Verbrennungsluft intensiv mischt, so dass Brenngas und Aschepartikel vollständig verbrennen.

Der Kern der Erfindung liegt also darin, in einer um den Erhitzerkopf des Stirlingmotors herum angeordneten Brennkammer Holzpellets zuerst mit, durch den heißen Abgasstrom, vorgewärmter Luft zu vergasen und unmittelbar danach zu verbrennen. Die Entaschung soll dabei vollständig über den Abgasstrom und mit dem Kondenswasser aus der Brennwerttechnik erfolgen.

In einer bevorzugten Ausführungsform dieses Verfahrens wird die Asche zusammen mit dem Abgas durch den Abgasrekuperator und einem diesem nachgeschalteten Brennwertwärmetauscher gesaugt, wobei eine so hohe Strömungsgeschwindigkeit eingehalten wird, dass sich Aschepartikel nicht an den Wärmetauscherwänden anlagern können. Die Aschepartikel werden im Brennwertwärmetauscher mit dem dort entstehenden Kondenswasser vermischt, wobei sich die löslichen Teile im Kondenswasser lösen und die nicht-löslichen Bestandteile mit dem Kondenswasser und dem Abgasstrom ausgespült bzw. ausgetragen werden. Durch die innige Durchmischung von Abgas, Aschepartikel und Kondenswasser werden auch feine Teilchen, wie Feinstaub oder Aerosole, aus dem Abgas ausgewaschen.

In einer bevorzugten Ausführungsform ist vorgesehen, dass das Abgas-Kondenswassser-Asche-Gemisch vor oder nach dem Seitenkanalverdichter in einem Abgas-KondenswasserSeperator, z.B. einem Zyklon, getrennt wird.

In einer bevorzugten Ausführungsform ist vorgesehen, dass Aschepartikel, die im Potenzialwirbel in der Brennkammer absinken, durch Luftstöße oder Abgasrückführung aus am Boden der Brennkammer angeordneten Luftdüsen wieder aufgewirbelt und aus der Brennkammer ausgetragen werden.

In einer bevorzugten Ausführungsform des Verfahrens erfolgt die Steuerung so, dass die momentane Brennerleistung über die Drehzahl des Seitenkanalverdichters geregelt wird und nur von der Erhitzerkopftemperatur des Stirlingmotors bestimmt wird. Der Lambdawert und die Brennstoffzufuhr sind ebenfalls unabhängig von der momentanen Brennerleistung, wobei der Lambdawert durch Verstellen des Mengenverhältnisses von Primär- zu Sekundärluft und die Pelletzufuhr durch die Überwachung der Rückstrahlung der Helligkeit der Oberseite des Glutbettes durch einen Licht-Sensor geregelt wird.

Nachfolgend werden zwei bevorzugte Ausführungsformen anhand der Zeichnungen näher erläutert. Dabei zeigen:
Fig. 1 eine schematische Gesamtansicht, die alle Funktionsteile eines Holzpellet-Blockheizkraftwerks gemäss einer ersten Ausführungsform veranschaulicht,
Fig. 2 eine vergrößerte Teil-Darstellung einer in Fig. 1 veranschaulichten Vergasungsbrennkammer, wobei außerdem die spezielle Verbrennungsluft-, Brenngas-und Abgasführung gezeigt sind.
Fig. 3a-d den prinzipiellen Aufbau der Vergasungsbrennkammer mit Rost und speziellen Ausführungsbeispielen bezüglich Primär- und Sekundärluftführung,
Fig. 4 eine vereinfachte schematische Ansicht eines besonders kompakten Holzpellet-Blockheizkraftwerks gemäß einer bevorzugten zweiten Ausführungsform, und
Fig. 5 eine vergrößerte Teil-Darstellung einer in Fig. 4 veranschaulichten Vergasungsbrennkammer, wobei außerdem wieder die spezielle Verbrennungslust-, Brenngas- und Abgasführung gezeigt sind.

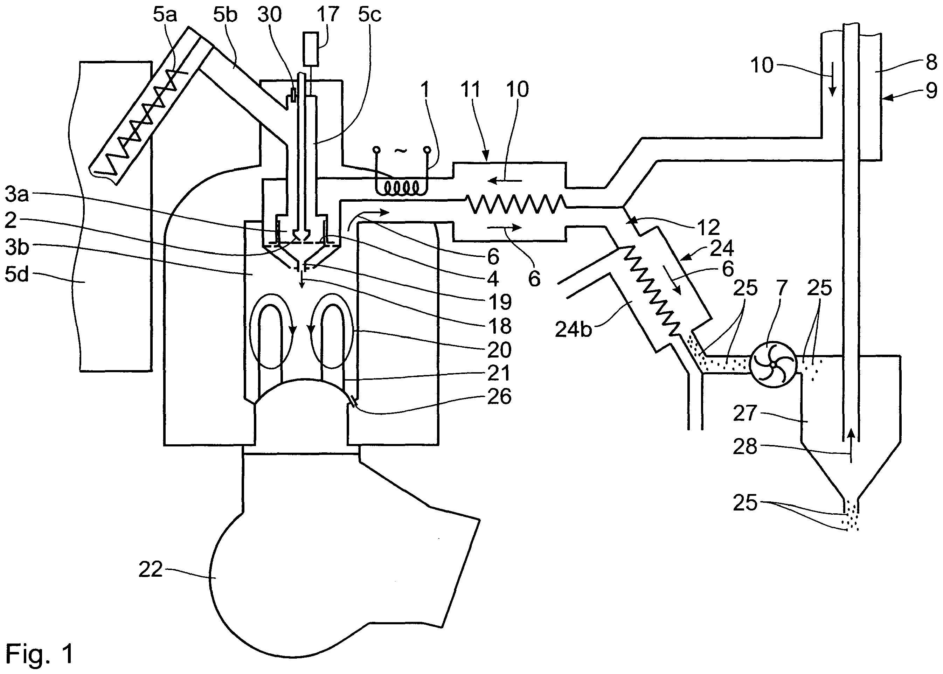

Durch eine elektrische Heizung 1 (Fig. 1) oder einen Gasbrenner 2 wird eine noch nicht mit Holzpellets beschickte Vergasungsbrennkammer 3 a, in der ein Rost 4 angeordnet ist, über die Zündtemperatur der Holzpellets vorgeheizt. Eine Dosierschnecke 5 a befördert über einen schrägen Fallschacht 5 b und einen senkrechten Fallschacht 5 c Pellets aus einem Vorratsbehälter 5 d auf den heißen Rost 4. Ein im Abgasstrom 6 der Brennkammer 3 b sitzender Seitenkanalverdichter 7 saugt über einen Außenmantel 8 eines doppelwandigen Brennwertkamins 9 Verbrennungsluft 10 aus der Umgebung an. Die Verbrennungsluft 10 wird in einem Rekuperator 11 von Umgebungstemperatur auf nahezu Brennkammertemperatur aufgeheizt, in dem der durch den Rekuperator 11 im Gegenstrom strömende Abgasstrom 6 aus der Brennkammer von Brennkammertemperatur auf Temperaturen < 200°C abgekühlt wird. Der Rekuperator 11 ist zwischen der Brennkammer 3 b und dem Seitenkanalverdichter 7 angeordnet und bildet eine Luft-Vorwärm-Einheit für die Verbrennungsluft 10.

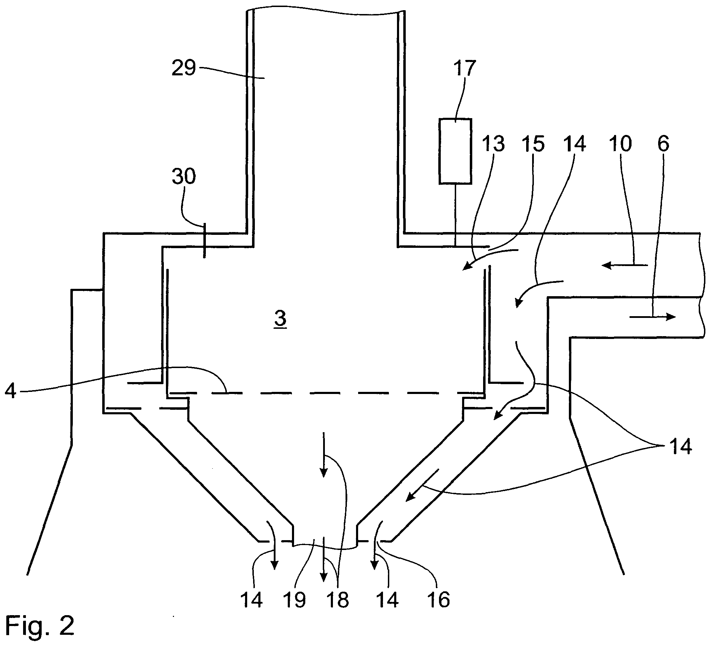

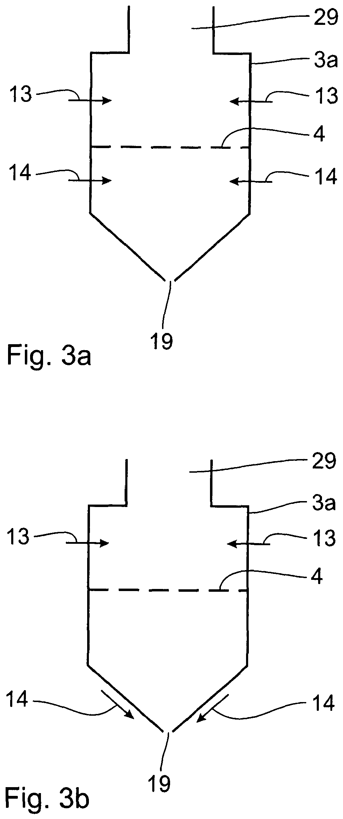

Gesteuert von einer im Abgasstrom 6 sitzenden Lambdasonde 12 wird die nun heiße Verbrennungsluft 10 stromabwärts des Rekuperators 11 in zwei Teilströme 13 und 14 aufgeteilt (Fig. 2), indem Primär- bzw. Sekundärluftöffnungen 15, 16 an der Vergasungsbrennkammer 3 mehr oder weniger frei gegeben werden, indem, wie hier beispielhaft dargestellt, ein Mikrostepper (Schrittmotor) 17 des oberen Teil der Vergasungsbrennkammer 3 hebt bzw. senkt, wodurch der Ringkanal 16 als Sekundärluftdüse mehr oder weniger freigegeben wird. Prinzipiell strömt die Primärluft 13 oberhalb des Rosts 4 ein, während die Sekundärluft 14 unterhalb des Rosts 4 einströmt, wie in den Figuren 3a-d noch näher erläutert ist. Je nach Luftmengenverhältnis von Primär- und Sekundärluft 13, 14 vergast bzw. verbrennt die heiße Primärluft 13 die Pellets auf dem Rost 4.

Das dabei entstehende Brenngas bzw. brennende Gas 18 wird durch den Rost 4 nach unten gesaugt und strömt mit einer hohen Strömungsgeschwindigkeit von bis über 20 m/s durch eine zentrale Düse 19 und wird je nach gewünschtem Lambdawert zusätzlich mit einem Strömungsimpuls heißer Sekundärluft 14 aus dem Ringkanal oder den kranzförmig angeordneten Düsen 16 versetzt. Der hohe Strömungsimpuls erzeugt in der Brennkammer 3 b (Fig. 1) einen Potenzialwirbel 20, der Abgas 6, Sekundärluft 14 und Brenngas 18 intensiv vermischt, so dass abhängig von der Temperatur der Brennkammer die Verbrennung an der Düse 19 stabilisiert wird oder mit zunehmender Temperatur sich die Verbrennung über die gesamte Brennkammer ausbreitet und wegen der hohen Abgasrückführungsrate in bekannter Weise flammenlos werden kann, wobei die Verbrennung besonders sauber wird und praktisch kein Stickoxid im Abgas feststellbar ist. Das Brenngas 18 und zuweilen durch den Rost 4 fallende kleine, noch nicht vollständig ausgebrannte Brennstoffpartikel haben durch den Potenzialwirbel 20 eine lange mittlere Verweildauer in der Brennkammer und verbrennen vollständig.

In der Brennkammer angeordnete Erhitzerröhrchen 21 eines Stirlingmotors 22 werden durch Konvektion des Potenzialwirbels 20 und Strahlung der heißen Brennkammerwände 23 gleichmäßig mit Hochtemperaturwärme beaufschlagt. Das noch heiße Abgas 6 verlässt die Brennkammer über den Rekuperator 11 und wird dort durch die im Gegenstrom einströmende kühle Verbrennungsluft 10 abgekühlt, wie weiter oben bereits beschrieben wurde.

Nach dem Rekuperator 11 passiert das Abgas 6 die Lambdasonde 12 und wird dann in einem Brennwertwärmetauscher 24 durch Wasserkühlung 24b, z.B. aus dem Hausheizungsrücklauf, wie in der Brennwerttechnik üblich, unter den Taupunkt abgekühlt. Dabei kondensiert der Wasserdampf des Abgases 6 zu Wassertröpfchen 25 und die Kondensationswärme steht als Nutzwärme im Kühlwasser zur Verfügung. Die λ-Sonde kann auch nach dem Brennwertwärmetauscher angeordnet sein, muss aber dann elektrisch auf Betriebstemperatur gehalten werden .

Die Entaschung erfolgt vollständig über den Abgasstrom 6. Die Strömungsgeschwindigkeit im Rekuperator 11, Brennwertwärmetauscher 24 sowie in den Sammelkanälen zum Seitenkanalverdichter 7 ist so hoch gewählt, dass sich Aschepartikel nicht anlagern können. Etwaig aus dem Potenzialwirbel 20 nach unten absinkende Aschepartikel können durch Pressluftstöße oder Abgasrückführung aus Düsen 26 wieder aufgewirbelt werden, damit sie im Potenzialwirbel 20 mitfliegen und die Chance haben den Rekuperatoreingang zu erreichen, um so ausgetragen zu werden.

Die Aschepartikel bestehen aus wasserlöslichen und nicht-wasserlöslichen Bestandteilen. Biomasseabgas hat einen sehr hohen Wasserdampfgehalt, beispielsweise verursacht ein Liter Holzpellets etwa 0,25 Liter Kondenswasser. Der Ascheanteil ist dagegen verschwindend gering, nämlich 0,001 Liter. Die wasserlöslichen Bestandteile der Asche lösen sich im Wasser, die unlöslichen werden mit dem Kondenswasser ausgeschwemmt und fliegen zusammen mit den Kondenswassertröpfchen durch den Seitenkanalverdichter 7 in einen Abgas-Kondenswasserseperator, z.B. einem Zyklon, 27. Dieser gibt das trockene Abgas 28 in den Kamin (in der Regel ein Kunststoffrohr, wie in der Brennwerttechnik üblich) und das Kondensat 25 zusammen mit der winzigen Menge Aschepartikel in die Kanalisation. Das Kondensat-Aschegemisch, eine helle, klare, wohlriechende Flüssigkeit, ist ph-neutral und kann auch aufgefangen werden, um als Mineraldünger Verwendung zu finden. Das auf diese Weise durch die Wasserkondensation in Brennwertwärmetauscher 24, Seitenkanalverdichter 7 und Zyklon 27 ausgewaschene Abgas enthält keinen Feinstaub mehr. Der gefürchtete Aerosoleintrag (Smog) in die Atmosphäre aus der Verbrennung von Festbrennstoffen entfällt.

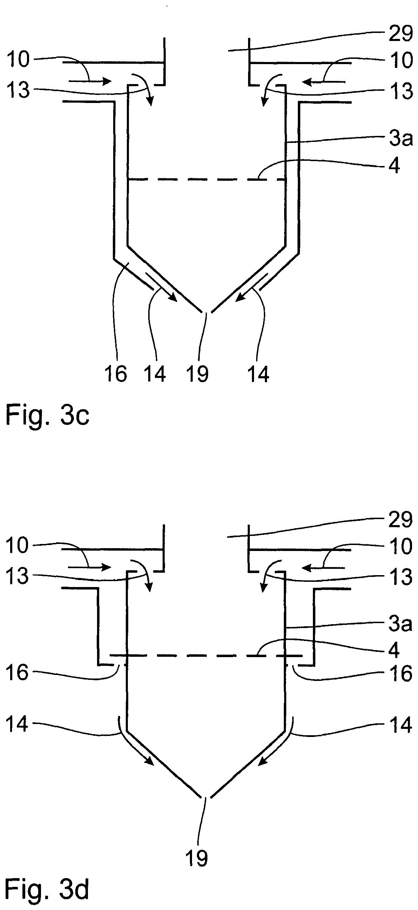

Fig. 3 a und 3 b zeigen beim grundsätzlichen Aufbau der Vergasungsbrennkammer 3 a mit Rost 4, Brennstoffzuführung 29 und zentraler Düse 19 zwei Arten der Sekundärluftführung, nämlich Fig. 3 a eine Sekundärluftzugabe vor der Düse 19 und Fig. 3b eine Sekundärluftzuführung hinter der Düse 19. Die Einstellung des Verhältnisses von Primärluft 13 zu Sekundärluft 14 erfolgt durch Anheben oder Verdrehen der Vergasungsbrennkammer 3 a, wodurch Sekundärluftöffnungen mehr oder weniger freigegeben werden, wie in Figur 3c und 3d noch näher erläutert wird.

In Figur 3c werden die Sekundärluftöffnungen 16 durch einen Ringspalt gebildet, der durch Anheben der Vergasungsbrennkammer vergrößert wird. In Fig. 3d sind die Sekundärluftöffnungen 16 kranzförmig angeordnete Löcher, die durch Anheben oder Verdrehen der Vergasungsbrennkammer 3 mehr oder weniger abgedeckt werden.

Für den Aufbau der Vergasungsbrennkammer 3 a ist eine einfache, robuste Konstruktion notwendig, weil alles im Hochtemperaturbereich liegt (700-1400°C). Diese Konstruktion muss eine präzise Dosierung der Sekundärluft 14 ermöglichen, um den Lambdawert nahe an die CO-Grenze zu stellen (ca. Lambda 1,5), weil ein zu hoher Luftüberschuss den elektrischen Wirkungsgrad entsprechend schmälern würde: z.B. Lambda 2,5 statt Lambda 1,5 ergibt einen elektrischen Wirkungsgrad von nur 25% statt 30%. Die Wände der Vergasungsbrennkammer 3 und die Luftdüsen werden jedoch durch die "nur" ca. 700°C heiße Verbrennungsluft 10 gekühlt. Der Rost 4 muss aus keramischen Werkstoffen sein.

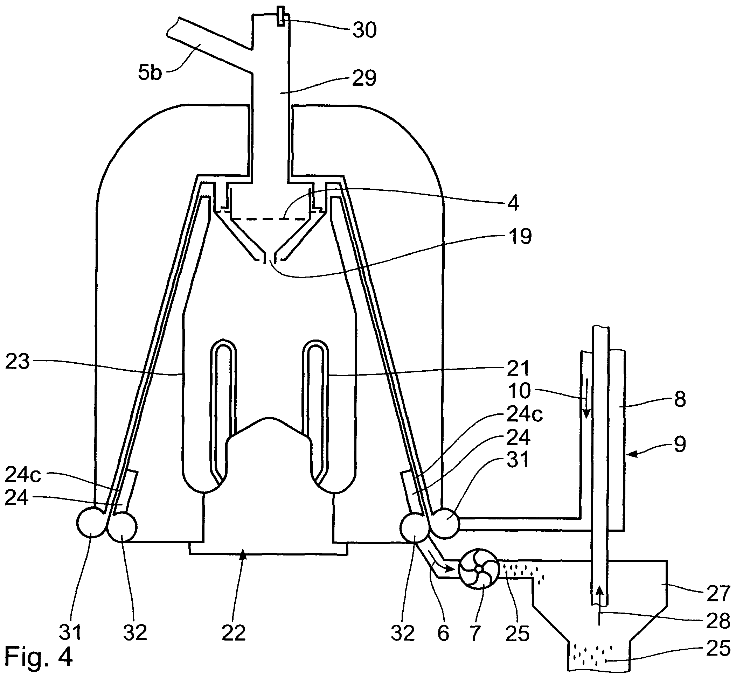

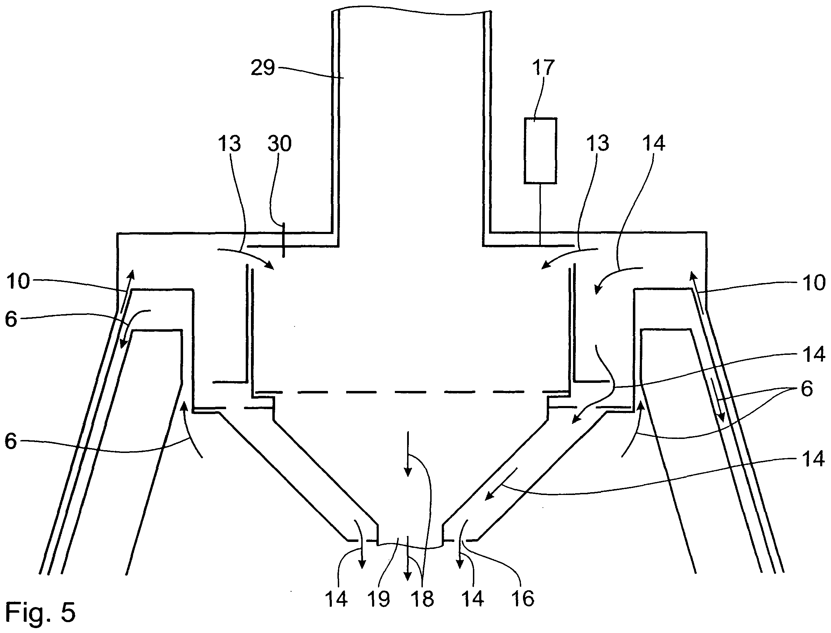

Fig. 4 zeigt eine besonders kompakte Ausführungsform des Holzpellet-BHKWs mit Stirlingmotor 22 von dem hier nur der Erhitzerkopf dargestellt ist. Der Abgasrekuperator 11 ist mit seinen Wärmetauscherflächen konzentrisch um die Brennkammerwände 23 gelegt und in die Wärmedämmung integriert. Zusätzlich ist ein ebenfalls konzentrisch am unteren Ende des Rekuperators 11 angeordneter Brennwertwärmetauscher 24 vorgesehen. Er wird durch eine wassergekühlte Innenfläche 24c gebildet, über die der Abgasstrom 6 gelenkt wird. Die konzentrischen Wärmetauscherkanäle für Verbrennungsluft und Abgas sind über Sammelkanäle 31, 32 an den Brennwertkamin 9 bzw. an den Seitenkanalverdichter 7 angeschlossen. Fig. 5 zeigt die Verbrennungsluft und Abgasführung.

Es ist möglich durch Auswechseln der Vergasungsbrennkammer 3 a unterschiedliche feste, flüssige und gasförmige Brennstoffe wie Holzpellets, Hackschnitzel, Pflanzenöl, Biogas etc. zu benutzen. Feste und flüssige Brennstoffe werden prinzipiell durch die vorgewärmte Verbrennungsluft (Primärluft) vergast und unmittelbar danach unter Zugabe von vorgewärmter Sekundärluft verbrannt. Die Vorwärmung der Verbrennungsluft in der Startphase, sowie die Zündung des vergasten Brennstoffes erfolgt elektrisch oder durch einen kleinen (Propan-)Gasaufheizbrenner.

Die Steuerung des Holzpellet-BHKWs mit Stirlingmotor (ohne Fig.) erfolgt nach den Erfordernissen des Stirlingmotors. Um einen hohen elektrischen Wirkungsgrad zu erzielen, muss die Erhitzerröhrchentemperatur auch im Teillastbereich an der oberen zulässigen Grenze gehalten werden (ca. 850°C). Die momentane Brennerleistung wird durch Änderung der Seitenkanalverdichterdrehzahl so eingestellt, dass die Erhitzerröhrchen-Solltemperatur gehalten wird, unabhängig von der Drehzahl und damit Leistungsabgabe des Stirlingmotors. Die Holzpelletzufuhr ist wiederum unabhängig von der momentanen Brennerleistung. Ein Licht-Sensor 30 (Fig. 1 und 4) erkennt, ob genügend Pellets auf der Glut liegen, indem er oberhalb des Glutbettes z. B. die Infrarothelligkeit misst. Ist die Glut zu hell, werden frische Pellet nachgelegt bis die helle Glut entsprechend abgedeckt ist und die Zufuhr stoppt. Der Soll-Lambdawert wird wiederum unabhängig von momentaner Brennerleistung und momentaner Stirlingmotorleistung über die Lambdasonde durch Verstellen des Mengenverhältnisses von Primär- und Sekundärluft eingestellt.

Der Holz-Pellet-Brenner des Holzpellet-BHKWs eignet sich hervorragend zur Erzeugung hoher Nutztemperaturen (größer 700°C) und ist neben der Beheizung von Stirlingmotoren auch zur Beheizung von Dampfreformern, um aus Methan und Wasserstoff zu erzeugen oder zur Beheizung von Hochtemperaturbrennstoffzellen, geeignet. Besonders hervorzuheben, weil besonders praktisch ist die erfindungsgemäße Ausgestaltung, dass die Asche mit dem Abgas durch Abgaswärmetauscher und Brennwertwärmetauscher gesaugt wird und mit dem entstehenden Kondenswasser aus dem Abgas ausgewaschen und nach der Separierung von Abgas und Kondenswasser mit diesem in die Kanalisation eingeleitet werden kann. Indem dem Abgas durch Aufheizung der Verbrennungsluft Energie entzogen wird, die damit in der Verbrennungszone bleibt, braucht das BHKW wenig Brennstoff und der elektrische Wirkungsgrad ist entsprechend hoch (25-30%). Der erzeugte Strom lässt sich durch das Erneuerbare-Energien-Gesetz (EEG) zu einem guten Preis an die Energieversorger verkaufen. Die Wirtschaftlichkeit ist dementsprechend hoch.

### Bezugszeichenliste

1 elektrische Heizung
2 Gasbrenner
3a Vergasungsbrennkammer
3b Brennkammer
4 Rost
5a Dosierschnecke
5b schräger Fallschacht
5c senkrechter Fallschacht
5d Vorratsbehälter
6 Abgasstrom
7 Seitenkanalverdichter
8 Außenmantel
9 doppelwandiger Brennwertkamin
10 Verbrennungsluft
11 Rekuperator, Luftvorwärmer
12 Lambdasonde
13 Primärluft
14 Sekundärluft
15 Primärluftöffnungen
16 Sekundärluftöffnungen, Ringkanal
17 Microstepper (Schrittmotor)
18 Brenngas, brennendes Gas
19 zentrale Düse
20 Potenzialwirbel
21 Erhitzerröhrchen
22 Stirlingmotor
23 Brennkammerwand
24 Brennwertwärmetauscher
24b Wasserkühlung
25 Wassertröpfchen, Kondensat
26 Düsen
27 Abgas-Kondenswasserseperator (Zyklon)
28 trockenes Abgas
29 Brennstoffzuführung
30 Helligkeitssensor
31 Sammelkanal für Verbrennungsluft
32 Sammelkanal für Abgas

## Patentansprüche

1. Verfahren zum Betrieb eines Holzpellet-Blockheizkraftwerks, umfassend eine Pelletzuführung (5a), eine Brennkammer (3b), eine der Brennkammer (3b) vorgeschaltete Vergasungsbrennkammer (3a) mit einem darin angeordneten Rost (4), eine Entaschungseinrichtung, einen Abgasrekuperator (11), und einen Stirlingmotor (22) mit einem angeschlossenen Seitenkanalverdichter (7), wobei
- der Abgasrekuperator (11) Verbrennungsluft (10) vorwärmt und Holzpellets mit einem Teil dieser heißen Luft (13) vergast werden,
- dieser Teil (13) der heißen Verbrennungsluft (10) oberhalb des Rosts (4) in die Vergasungsbrennkammer (3a) geführt wird und das so entstehende Brenngas (18) zusammen mit Asche von dem Seitenkanalverdichter (7) nach unten durch den Rost (4) in die Brennkammer (3b) des Stirlingmotors (22) gesaugt wird,
- das Brenngas (18) unter dem Rost (4) derartig mit einem Strömungsimpuls des Restes (14) der heißen Verbrennungsluft (10) versetzt wird, dass zum einen ein niedriger Lambdawert nahe der CO-Grenze eingehalten wird und abhängig von der Temperatur der Brennkammer (3b) die Verbrennung an einer zentralen Düse (19) zwischen Vergasungsbrennkammer (3a) und der Brennkammer (3b) stabilisiert wird oder sich mit zunehmender Temperatur der Brennkammer (3b) mehr und mehr der Zustand der flammenlosen Verbrennung einstellt, wobei in der Brennkammer (3b) des Stirlingmotors (22) ein Potenzialwirbel (20) entsteht, der Abgas (6), Brenngas (18) und heiße Verbrennungsluft (14) intensiv mischt, so dass Brenngas (18) und Aschepartikel vollständig verbrennen.

2. Verfahren nach Anspruch 1, **dadurch gekennzeichnet, dass**
- die Asche zusammen mit dem Abgas (6) aus dem Stirlingmotor (22) durch den Abgasrekuperator (11) und einem diesen nachgeschalteten Brennwertwärmetauscher (24) gesaugt wird, wobei eine so hohe Strömungsgeschwindigkeit eingehalten wird, dass Aschepartikel sich nicht an den Wärmetauscherwänden anlagern können,
- die Aschepartikel im Brennwertwärmetauscher (24) mit dem dort entstehenden Kondenswasser vermischt werden, wobei sich die löslichen Teile im Kondenswasser lösen und die nicht-löslichen Bestandteile mit dem Kondenswasser und dem Abgasstrom (6) ausgespült bzw. ausgetragen werden, und
- durch die innige Durchmischung von Abgas (6), Aschepartikel und Kondenswasser auch feine Partikel aus dem Abgas (6) ausgewaschen werden.

3. Verfahren nach Anspruch 1 und 2, **dadurch gekennzeichnet, dass** das Abgas-Kondenswasser-Asche-Gemisch vor oder nach dem Seitenkanalverdichter (7) in einem Abgas-Kondenswasserseperator (27), z.B. einem Zyklon, getrennt wird.

4. Verfahren nach Anspruch 1, 2 und 3, **dadurch gekennzeichnet, dass** Aschepartikel, die im Potenzialwirbel (20) in der Brennkammer (3b) absinken, durch Luftstöße oder Abgasrückführung aus am Brennkammerboden angeordneten Luftdüsen (26) wieder aufgewirbelt werden.

5. Verfahren nach Anspruch 1, 2, 3 und 4, **dadurch gekennzeichnet, dass** die Steuerung so erfolgt, dass die momentane Brennerleistung über die Drehzahl des Seitenkanalverdichter (7) geregelt wird und nur von der Erhitzerkopftemperatur des Stirlingmotors (22) bestimmt wird,
der Lambdawert und die Brennstoffzufuhr ebenfalls unabhängig von der momentanen Brennerleistung sind, wobei der Lambdawert durch Verstellen des Mengenverhältnisses von Primär- zu Sekundärluft und die Pelletzufuhr durch die Überwachung der Rückstrahlung der Helligkeit der Oberseite des Glutbettes in der Vergasungsbrennkammer (3a) durch einen Licht-Sensor (30) geregelt wird.

## Claims

1. Method for operating a wood-pellet cogeneration unit, comprising a pellet feed (5a), a combustion chamber (3b) with an advance gasification combustion chamber (3a) and a grate (4) arranged therein, an ash removal device and a Stirling engine (22) with a connected side channel blower (7), wherein
- an exhaust gas recuperator (11) preheats combustion air (10) and wood pellets are gasified with a portion of said hot air (13);
- said portion (13) of the hot combustion air (10) is directed above the grate (4) into the gasification combustion chamber (3a) and the fuel gas (18) thus produced is sucked downwards through the grate (4) together with the ash by a side channel blower (7) into the combustion chamber (3b) of the Stirling engine (22);
- the fuel gas (18) under the grate (4) is displaced with a flow impulse of the remainder (14) of the hot combustion air (10) that firstly a low lambda value close to the CO limit is maintained and, depending on the temperature of the combustion chamber (3b), the combustion is stabilized at a central nozzle (19) between gasification combustion chamber (3a) and the combustion chamber (3b) or, with increasing temperature of the combustion chamber (3b), the state of flameless combustion is increasingly obtained, wherein a potential vortex (20) is produced in the combustion chamber (3b) of the Stirling engine (22), which vortex intensively mixes exhaust gas (6), fuel gas (18) and hot combustion air (14), so that fuel gas (18) and ash particles will burn completely.

2. Method according to claim 1, **characterized in that**
- the ash is sucked together with the exhaust gas (6) through the exhaust gas recuperator (11) and a condensing heat exchanger (24) arranged downstream of the same, with such a high flow speed being maintained that ash particles cannot accumulate on the heat exchanger walls;
- the ash particles are mixed in the condensing heat exchanger (24) with the condensed water obtained there, with the soluble parts dissolving in the condensed water and the non-soluble parts being scavenged and removed with the condensed water and the exhaust gas flow (6); and
- by thorough mixing of exhaust gas (6), ash particles and condensed water, even fine particles are washed out of the exhaust gas (6).

3. Method according to claim 1 and 2, **characterized in that** the mixture of exhaust gas, condensed water and ashes is separated before or after the side channel blower (7) in an exhaust-gas/condensed water separator (27) such as a cyclone.

4. Method according to claim 1, 2 and 3, **characterized in that** ash particles which subside in the potential vortex (20) in the combustion chamber (3b) are stirred up again by air jets or exhaust gas recirculation from air nozzles (26) arranged in the floor of the combustion chamber.

5. Method according to claim 1, 2, 3 and 4, **characterized in that** control is made in such a way that the momentary burner output is regulated through the speed of the side channel blower (7) and is only determined by the heater head temperature of the stirling engine (22), and the lambda value and the fuel supply are also independent of the momentary burner output, with the lambda value being regulated by adjustment of the quantity ratio of primary air to secondary air and the pellet supply being regulated by a light sensor (30) by monitoring the reflection of the brightness of the upper side of the bed of embers in the gasification combustion chamber (3a).

## Revendications

1. Procédé pour faire fonctionner une centrale de cogénération à granulés de bois, comprenant une alimentation en granulés (5a), une chambre de combustion (3b), une chambre de combustion à gazéification (3a) montée en amont de la chambre de combustion (3b) avec une grille (4) disposée dans celle-ci, un dispositif d'extraction de cendres, un récupérateur de gaz d'échappement (11) et un moteur Stirling (22) avec un compresseur à canal latéral (7) raccordé,
- le récupérateur de gaz d'échappement (11) préchauffant l'air de combustion (10) et les granulés de bois étant gazéifiés avec une partie de cet air chaud (13),
- cette partie (13) de l'air de combustion chaud (10) étant guidée au-dessus de la grille (4) dans la chambre de combustion à gazéification (3a) et le gaz de combustion ainsi obtenu (18) étant aspiré conjointement avec les cendres provenant du compresseur à canal latéral (7) vers le bas à travers la grille (4) dans la chambre de combustion (3b) du moteur Stirling (22),
- le gaz de combustion (18) sous la grille (4) étant soumis à une impulsion d'écoulement par le reste (14) de l'air de combustion chaud (10) de telle sorte que d'une part une faible valeur lambda soit conservée à proximité de la limite de CO et qu'en fonction de la température de la chambre de combustion (3b), la combustion soit stabilisée au niveau d'une buse centrale (19) entre la chambre de combustion de gazéification (3a) et la chambre de combustion (3b) ou que l'état de combustion sans flamme s'ajuste de manière croissante avec l'augmentation de la température de la chambre de combustion (3b), un tourbillon de potentiel (20) s'établissant dans la chambre de combustion (3b) du moteur Stirling (22), lequel mélange intensément le gaz d'échappement (6), le gaz de combustion (18) et l'air de combustion chaud (14) de telle sorte que le gaz de combustion (18) et les particules de cendres soient entièrement brûlés.

2. Procédé selon la revendication 1, **caractérisé en ce que**
- les cendres, conjointement avec le gaz d'échappement (6), sont aspirées hors du moteur Stirling (22) par le récupérateur de gaz d'échappement (11) et un échangeur de chaleur pour gaz de fumée (24) monté en aval de celui-ci, une vitesse d'écoulement suffisamment élevée étant maintenue de telle sorte que les particules de cendres ne puissent pas s'accumuler sur les parois de l'échangeur de chaleur,
- les particules de cendres dans l'échangeur de chaleur pour gaz de fumée (24) sont mélangées avec l'eau de condensation générée à cet endroit, les particules solubles se dissolvant dans l'eau de condensation et les constituants non-solubles étant rincés ou évacués avec l'eau de condensation et le courant de gaz d'échappement (6), et
- les fines particules sont également éliminées par lavage hors du gaz d'échappement (6) par le mélange intime du gaz d'échappement (6), des particules de cendres et de l'eau de condensation.

3. Procédé selon les revendications 1 et 2, **caractérisé en ce que** le mélange de gaz d'échappement, d'eau de condensation et de cendres est séparé avant ou après le compresseur à canal latéral (7) dans un séparateur d'eau de condensation et de gaz d'échappement (27), par exemple un cyclone.

4. Procédé selon les revendications 1, 2 et 3, **caractérisé en ce que** les particules de cendres qui descendent dans la chambre de combustion (3b) dans le tourbillon de potentiel (20), sont à nouveau remises en tourbillonnement par des jets d'air ou une recirculation de gaz d'échappement sortant de buses à air (26) disposées au niveau du fond de la chambre de combustion.

5. Procédé selon les revendications 1, 2, 3 et 4, **caractérisé en ce que** la commande s'effectue de telle sorte que la puissance instantanée du brûleur soit réglée par la vitesse de rotation du compresseur à canal latéral (7), et soit seulement déterminée par la température de tête du dispositif de chauffage du moteur Stirling (22), la valeur lambda et l'alimentation en carburant sont également indépendantes de la puissance instantanée du brûleur, la valeur lambda étant réglée par réglage du rapport quantitatif d'air primaire et d'air secondaire et l'alimentation en granulés étant réglée par un capteur de lumière (30), par contrôle de la réverbération de la luminosité du côté supérieur du lit de braises dans la chambre de combustion à gazéification (3a) .
